# EUROPEAN PATENT SPECIFICATION

(11) **EP 2 516 845 B1**
(45) Date of publication and mention of the grant of the patent: **12.12.2018**
(21) Application number: 10796042.9
(22) Date of filing: 21.12.2010
(51) Int. Cl.: F03D 1/06

(54) **A HUB FOR A WIND TURBINE AND A METHOD FOR FABRICATING THE HUB**
NABE FÜR EINE WINDTURBINE UND VERFAHREN ZUR HERSTELLUNG DER NABE
MOYEU POUR UNE ÉOLIENNE ET PROCÉDÉ DE FABRICATION DU MOYEU

(30) Priority: 21.12.2009 DK 200970287; 21.12.2009 US 288617 P
(43) Date of publication of application: 31.10.2012
(60) Divisional application: 18201614.7
(73) Proprietor: Vestas Wind Systems A/S, 8200 Aarhus N (DK)
(72) Inventor: BECH, Anton, DK-6950 Ringkøbing (DK); BITSCH, Michael Lundgaard, DK-8860 Ulstrup (DK)
(86) International application number: PCT/EP2010/070387
(87) International publication number: WO 2011/076795

(56) References cited:
- EP-A2- 1 882 854
- WO-A1-03/064854
- WO-A1-2008/003389
- WO-A1-2010/070767

## Description

### FIELD OF THE INVENTION

The present invention relates to a hub for a wind turbine. The hub of the invention is easy to handle during fabrication and transport, even if the size of the hub is very large. The invention further relates to a method for fabricating such a hub.

### BACKGROUND OF THE INVENTION

In the wind power industry there is a tendency to produce wind turbines of increasing size. Thereby the size of the individual parts of the wind turbines, such as the hub, also increases. The large parts are difficult to handle during manufacture as well as during transport from the manufacturing facility to the operating site of the wind turbine. For instance, when a part, such as a hub, is manufactured using a casting technique, a mould is initially formed by sand, and liquid metal is poured into the mould. When the part has cooled, it is removed from the sand, and the sand is cleaned and reused for forming the next mould. In the case that the part being casted is relatively small, the sand mould can be formed in a casing in such a manner that a minimum amount of sand is used. When the part has cooled, the casing including the sand and the casted part is moved, using a crane, to a position where the casing is opened, thereby releasing the sand and the casted part. This makes is easy to prepare the sand for reuse. In the case that the part being casted is relatively large and heavy, the cranes which are normally used for this purpose will not be able to lift a casing including sand and casted part. It is therefore necessary to form the sand mould directly in a depression or the like in the ground. In this case the sand must be removed manually from the depression, and the amount of sand required for forming the mould increases.

Furthermore, the buoyancy of the sand causes forces to act on the casted part. If very large parts are casted, the amount of sand is also very large, and the forces acting on the casted part may thereby become excessive.

Furthermore, moving large wind turbine parts, such as hubs, is very difficult. The vehicles used for moving the parts must be very large, and it may be difficult to manoeuvre such vehicles on normal roads, and it may disturb the normal traffic. The vehicles must also be able to carry the weight of the parts, and the weight distribution along the vehicle may be uneven, thereby posing further demands to the vehicle.

Finally, handling of large wind turbine parts at the manufacturing site and on the operating site of the wind turbine is difficult, simply due to the large size and high weight of the parts.

US 6,942,461 discloses a rotor blade hub for a wind power installation. The rotor blade hub is divided into a hub core and a number of outer hub portions corresponding to the number of rotor blades. The outer hub portions are each connected to the hub core and to a rotor blade. The hub core is a relatively large part, and the disadvantages regarding handling and manufacture of large parts are therefore not fully avoided by this hub.

WO 01/42647 discloses a wind turbine rotor hub comprising two shells which are mutually adhered via a plane extending transversely of the rotation axis of the hub. The shells are made from a composite material.

Another prior art hub is known from WO2008/003389.

### DESCRIPTION OF THE INVENTION

It is an object of embodiments of the invention to provide a hub for a wind turbine which is easy to handle during manufacture and transport.

It is a further object of embodiments of the invention to provide a hub for a wind turbine which can be manufactured using a casting technique, even if the hub is very large.

It is an even further object of embodiments of the invention to provide a method for fabricating a hub for a wind turbine, said method allowing even very large hubs to be manufactured using a casting technique.

It is an even further object of embodiments of the invention to provide a method for fabricating a large hub for a wind turbine using a casting technique, where the casting process is performed using less manual labour than prior art methods.

According to a first aspect the invention provides a hub for a wind turbine, the hub comprising a continuous shell forming a hollow body with a main shaft flange adapted to connect the hub to a main shaft and one or more blade flanges, each blade flange being adapted to connect the hub to a wind turbine blade, the hollow body being assembled from at least two hub parts connected to each other via one or more connection portions, each hub part being casted from a castable material, wherein at least one blade flange and/or the main shaft flange comprises a section forming part of or being attached to one of the hub parts and a section forming part of or being attached to another hub part.

As the hub comprises at least two sections, the at least two section are joined along a dividing line. As the dividing line intersects at least one of the blade flanges and/or the main shaft flange, the at least one blade flange and/or the main flange comprises a section forming part of or being attached to one of the hub parts and a section forming part of or being attached to another hub part. Thus, according to the invention the connecting portion(s) intersect(s) at least one blade flange and/or the main shaft flange.

As the flanges may be separate parts being attached to the hub, the blade flange and/or the main shaft flange may comprise a section being attached to one of the hub parts and a section being attached to another hub part.

Alternatively, the flanges may form part of the hub, and thus at least one blade flange and/or the main shaft flange comprises a section forming part of one of the hub parts and a section forming part of another hub part.

It should be understood, that a hub comprising a continuous shell is a hub formed by a shell which when assembled forms a single entity, i.e. the at least two hub parts are not movable relative to each other when assembled, except for deformations during use. The continuous shell may however comprise one or more apertures, such as openings for maintenance workers or other persons who have to access the hub during mounting hereof at a nacelle or during maintenance of the wind turbine.

In the present context the term 'wind turbine' should be interpreted to mean an apparatus which is capable of transforming energy of the wind into electrical energy, preferably to be supplied to a power grid. A set of wind turbine blades extract the energy from the wind, thereby causing a rotor to rotate. The rotational movements of the rotor are transferred to a generator, either directly via a stator part and a rotor part, or via a drive train, e.g. including a main shaft, a gear system and an input shaft for the generator.

The hub is the part of the wind turbine which carries the wind turbine blades. The hub rotates when the wind turbine blades extract energy from the wind. In the case that the wind turbine is of a kind comprising a drive train for transferring the rotational movements of the rotor to the generator, the hub may advantageously be connected to a main shaft in such a manner that rotational movements of the hub are transferred to rotational movements of the main shaft. In the hub of the present invention, the main shaft is connected to the hub via a main shaft flange on the hub and a corresponding flange on the main shaft. Similarly, the wind turbine blades are connected to the hub via respective blade flanges and corresponding flanges on the wind turbine blades, preferably via a pitch bearing.

The hub comprises at least two hub parts, each hub part being connected to at least one other hub part via one or more connecting portions. Thus, the hub is divided into a number of smaller parts which are manufactured separately and subsequently assembled to form the hub. Since the hub parts are smaller than the resulting hub, they are much easier to handle during manufacture and transport, than would be the case if the hub was manufactured in a single piece.

The hub parts are connected to each other via one or more connecting portions. The connecting portions are matching interfaces formed on the hub parts to allow a suitable connection between the hub parts, thereby forming the hub. The connecting portions may, e.g., comprise flanges or flange like portions.

The connecting portion(s) intersect(s) at least one blade flange and/or the main shaft flange. Thus, at least one of the flanges formed on the hub is formed from portions of at least two different hub parts. Accordingly, the hub is divided in such a manner that there is no 'core portion' with a large internal volume, when the hub is not assembled. Thereby it is ensured that the hub parts have manageable sizes, and that they are easy to handle, e.g. during manufacture and transport.

When assembled, the hub comprises a continuous shell forming a hollow body, the hollow body being assembled from at least two hub parts connected to each other via one or more connection portions.

The hub parts have been casted from a castable material. Accordingly, each of the hub parts is manufactured using a casting technique. This is an advantage, because casting is a low cost manufacturing method, and the resulting parts are relatively strong and durable. It is a requirement that a hub for a wind turbine is strong and durable, in particular in the case of large wind turbines, because the hub normally carries high loads during operation. Furthermore, since the hub comprises at least two hub parts, which are casted separately, and since the hub parts are significantly smaller than the resulting hub, due to the connecting portion(s) intersecting at least one flange, it is possible to perform the casting using casings as described above, thereby reducing the need for manual labour during the casting process, and facilitating reuse of the sand used for forming the casting mould.

In summary, the hub of the invention is easy to handle during manufacture and transport, due to the at least two hub parts. It is manufactured using a cost effective technique, which also provides a strong and durable hub which is able to withstand the expected loads during operation.

The hub parts may be made from cast metal, such as cast iron, e.g. Spheroidal Ductile Cast Iron, EN-GJS-400-18, or any other suitable kind of cast metal.

Each of the flanges may form an opening in the continuous shell into an internal space within the hollow body.

The hub may comprise two hub parts, and the connecting portion(s) may intersect at least one blade flange, i.e. at least one of the blade flanges may comprise a section forming part of or being attached to one of the hub parts and a section forming part of or being attached to the other hub part. According to this embodiment, the hub preferably comprises a rear part having the main shaft flange formed completely therein and a front part arranged opposite to the rear part. In a similar embodiment, the rear part and/or the front part may be formed by a number of hub parts, e.g. arranged circumferentially about a rotational axis for the hub. In this case, the rear part may, e.g., be formed from a single hub part, thereby avoiding dividing the main shaft flange, and the front part may be formed from a number of hub parts, e.g. two or three, thereby reducing the size of the individual hub parts used for this part of the hub.

As an alternative, the number of hub parts may be equal to the number of blade flanges, and the connecting portion(s) may intersect the main shaft flange, i.e. the main flange may comprise a section forming part of or being attached to one of the hub parts and a section forming part of or being attached to another hub part. According to this embodiment, the hub parts are preferably arranged circumferentially with respect to a rotational axis of the hub. The hub parts may advantageously be substantially identical in size and shape and they may be arranged substantially symmetrically with respect to the wind turbine blades. In a similar embodiment, one or more of the hub parts may be formed from two or more hub parts, e.g. a rear part and a front part.

In the embodiment described above, the connecting portion(s) may further intersect at least one blade flange, so that least one of the blade flanges comprises a section forming part of or being attached to one of the hub parts and a section forming part of or being attached to another hub part. In this case the parts of the hub which are arranged between the blade flanges are preferably each contained in a single hub part. Thereby the strength of these parts is not compromised by connections between hub parts.

As an alternative, the connecting portion(s) may further extend between two blade flanges, i.e. may intersect at least one region between two blade flanges. In this case, the blade flanges are preferably each contained in a single hub part. Thereby the strength of the blade flanges is not compromised by connections between hub parts.

As yet another alternative, some connecting portions may intersect blade flanges, while other connecting portions may intersect the regions between the blade flanges. In this case the number of hub parts may advantageously be twice the number of blade flanges.

It should be noted that the present invention also covers embodiments where the hub may comprise any number of hub parts, as long as there is at least two, and they may be arranged relative to each other in any manner which is appropriate for the specific hub.

The hub parts may be connected to each other by means of reversible connecting means, such as one or more bolt assemblies. Such assemblies allow the hub parts to be easily connected to each other, and the assembly may even take place at the operating site of the wind turbine. Thereby the transport of the hub from the manufacturing site to the operating site is facilitated. Furthermore, reversible connecting means allow the hub parts to be disconnected from each other at a later point in time, e.g. in connection with repair, maintenance or decommission of the wind turbine.

As an alternative to reversible connecting means, the hub parts may be connected to each other in a permanent manner, e.g. by welding.

The hub may further comprise one or more reinforcement elements arranged at or near the flange(s). In order to reduce the size and weight of the hub, it is desirable to make the region between the flanges as small or narrow as possible. However, this introduces a risk that the strength and stiffness of these parts of the hub becomes too low to withstand the loads occurring during operation of the wind turbine. By arranging reinforcement elements at or near the flanges, in particular in the regions between the flanges, a low size and a low weight of the hub can be achieved without compromising the strength and stiffness of the hub, in particular in the regions between the flanges. The reinforcement element may be of particular relevance in the regions between the blade flanges.

The reinforcement element(s) may comprise an inner wall arranged within the hollow body at a distance to the continuous shell which can be seen as a main wall, thereby forming a cavity between the inner wall and the continuous shell. According to this embodiment, the reinforcement element in the form of an inner wall and the continuous shell in combination provide the sufficient strength and stiffness to the regions between the flanges. The cavity ensures that the strength and stiffness is obtained without increasing the weight of the hub excessively. The inner wall and the continuous shell may form a tubular element. Such an element is known to have a stiffness which is almost as high as a solid object with the same outer dimensions. However, the weight is significantly reduced due to the cavity inside the element.

The inner wall may form an integral part of a hub part, and it may, in this case, be formed directly during the casting of the hub part. As an alternative, the inner wall may be manufactured separately and subsequently attached to one or more hub parts, e.g. by means of bolt connections.

Alternatively or additionally, the reinforcement element(s) may comprise one or more ribs. The ribs may, e.g., be formed by adding material in the form of ribs at or near the flanges, in particular in the regions between the flanges. As an alternative, the ribs may be formed by casting the regions at or near the flanges with a relatively high wall thickness, and subsequently removing some of the wall material. In any event, the ribs provide stiffness and strength to the regions at or near the flanges without excessively increasing the weight of the hub, similarly to the situation described above with reference to the inner wall. The reinforcement element may be of particular relevance in the regions between the blade flanges.

The hub may further comprise at least one stiffening element interconnecting at least two connecting portions of a first hub part and at least two connecting portions of a second hub part. Such a stiffening element provides further stiffness to the hub, thereby providing a more rigid construction. The stiffening element(s) may extend in the hollow body of the hub. In this case the stiffening element may be a substantially solid plate interconnecting all of the connecting portions and substantially filling out a cross section of the hub. As an alternative, the stiffening element may be a substantially solid plate with a shape which differs from a cross sectional shape of the hub at the position of the stiffening element. For instance, in the case that a first hub part comprises three connecting portions, each being adapted to be connected to a connecting portion of a second hub part, then the stiffening element may, e.g., have a substantially triangular shape or a Y-like shape, the angles of the triangle or the end points of the 'Y' being arranged at the positions of the connecting portions. As another alternative, the stiffening element may comprise a number of rods or flat elongated members, each interconnecting two sets of connecting portions.

The hub may further comprise at least one tube section interconnecting at least two of the hub parts. A tube section may directly interconnect two hub parts, or two hub parts may be interconnected via two or more tube sections. In the case that the hub comprises a stiffening element as described above, a tube section may interconnect the stiffening element and one of the hub parts. The tube section(s) provide(s) an even more rigid construction of the hub. In the case that the hub comprises a front hub part and a rear hub part, the tube section(s) may advantageously be arranged along a direction defined by the rotational axis of the hub during operation, and it/they may be arranged to connect a stiffening element to the front hub part and/or to the rear hub part.

To further reinforce the hub at the blade flanges, the hub may further comprises at least one blade flange reinforcement elements arranged at the blade flange(s) and extending primarily within the opening delimited by the flange(s), e.g. substantially in the plane defined by the flange(s). In one embodiment, a blade reinforcement element may be arranged at each of the blade flanges.

The blade flange reinforcement element may comprise a circular plate element which may be of a size corresponding to the size of the blade flanges, thereby providing a more rigid construction of the hub. The circular plate element may be a solid plate or may be a plate having openings, such as an opening allowing a person to access the hollow body of the shell. The opening may e.g. be off-set from the centre of the plate element, e.g. for allowing more easy access from the edge of the flange. This is particularly relevant for large wind turbines where the flange(s) can be several metres in diameter.

The blade flange reinforcement element may alternatively comprise a number of braces or rod shaped elements extending between points on the periphery of the flange(s).

As an alternative or as a supplement to the blade flange reinforcement element described above, the blade flange reinforcement element may comprise a ring shaped element. The ring shaped element may be of a size corresponding to the size of the blade flange and may be positioned on top of the blade flange, thereby providing a more rigid blade flange with a higher strength. A similar ring shaped reinforcement element may also be used to reinforce the main shaft flange.

To facilitate transportation of the ring shaped element it may comprise at least two ring parts, such a two halves, four quarters, or another number of parts which form a ring when positioned with respective end portions abutting each other. The ring parts may be positioned so that at least some of their end portions when abutting each other, i.e. the abutting joints between the ring parts, may be positioned displaced relative to the connecting portion(s), thereby increasing the strength of the connecting portion(s).

According to a second aspect the invention provides a method of fabricating a hub for a wind turbine, the hub comprising a continuous shell forming a hollow body with a main shaft flange adapted to connect the hub to a main shaft, and one or more blade flanges, each blade flange being adapted to connect the hub to a wind turbine blade, the method comprising the steps of:
- casting at least two hub parts,
- machining one or more connecting portions in each of the hub parts, and
- assembling the hub parts via said connecting portions so that at least one of the blade flanges and/or the main shaft flange comprises a section forming part of or being attached to one of the hub parts and a section forming part of or being attached to another hub part.

It should be noted that a person skilled in the art would readily recognise that any feature described in combination with the first aspect of the invention could also be combined with the second aspect of the invention, and vice versa.

Performing the method according to the second aspect of the invention preferably results in a hub according to the first aspect of the invention being fabricated.

According to the second aspect of the invention, a hub is fabricated by initially casting at least two hub parts. One or more connecting portions are then machined in each of the hub portions, thereby providing interfaces which are suitable for connecting the hub parts to each other. Next the hub parts are connected to each other via the connecting portions, thereby forming the hub. The hub parts are connected in such a manner that at least one blade flange and/or the main shaft flange comprises a section forming part of or being attached to one of the hub parts and a section forming part of or being attached to another hub part, as described above with reference to the first aspect of the invention. Thus, the hub parts are casted separately and subsequently assembled, and the advantages described above with reference to the first aspect of the invention regarding the casting process and the handling of the hub parts are thereby obtained.

Machining of one or more of the connecting portions may be necessary to ensure dimensions within the required tolerances. As the hub part may each be very large is may also be necessary to machine other parts of the hub parts. This may in one embodiment be done after assembling of the hub parts. It may especially be an advantage to machine the flanges which comprise a section forming part of one hub part and a section forming part of another hub part after assembling to comply with the tolerances and thereby facilitate attachment of the wind turbine blades.

The step of assembling the hub parts may comprise bolting at least one connecting portion of one hub part to at least one connecting portion of another hub part. As an alternative, the hub parts may be assembled by means of other reversible connecting means, such as pins, or they may be assembled in an irreversible manner, e.g. by welding the connecting portions to each other.

The step of casting at least two hub parts may comprise casting a rear part having the main shaft flange formed therein and a front part. According to this embodiment, the main shaft flange is formed completely in one hub part, and the blade flanges are each divided between two hub parts. As an alternative, the hub may be divided in any other suitable manner, in particular as described above with reference to the first aspect of the invention.

The method may further comprise the step of arranging a casting core in a region near at least one blade flange, prior to or during the step of casting at least two hub parts, in order to form a cavity between an inner wall and the continuous shell in said region. According to this embodiment, a reinforcement element is formed at or near at least one of the blade flanges, the reinforcement element defining a cavity between the inner wall and the continuous shell. The advantages obtained by this have been described above with reference to the first aspect of the invention. The fact that the hub parts are casted separately makes it easier to arrange the casting core in an appropriate position than would be the case if the hub had been casted in one piece.

The step of assembling the hub parts may comprise connecting at least one stiffening element to at least two connecting portions of a first hub part and to at least two connecting portions of a second hub part. According to this embodiment, when the hub is assembled, a stiffening element is arranged between respective pairs of connecting portions of two hub parts. The stiffening element provides additional stiffness to the hub as described above with reference to the first aspect of the invention.

According to a third aspect the invention provides a wind turbine comprising a hub according to the first aspect of the invention.

It should be understood that a person skilled in the art would readily recognise that any feature described in combination with the first and second aspects of the invention could also be combined with the third aspect of the invention.

### BRIEF DESCRIPTION OF THE DRAWINGS

The invention will now be described in further details with reference to the accompanying drawings in which
Figs. 1 and 2 are exploded views of a hub according to a first embodiment of the invention,
Figs. 3 and 4 are exploded views of a hub according to a second embodiment of the invention,
Figs. 5 and 6 are exploded views of a hub according to a third embodiment of the invention,
Figs. 7 and 8 are perspective views of a front hub part for a hub according to a fourth embodiment of the invention,
Figs. 9 and 10 are perspective views of a rear hub part of the hub according to the fourth embodiment of the invention,
Fig. 11 is a detail of the rear hub part of Figs. 9 and 10,
Fig. 12 is an exploded view of a hub according to a fifth embodiment of the invention,
Fig. 13 is an exploded view of a hub according to a sixth embodiment of the invention,
Fig. 14 is an exploded view of a hub according to a seventh embodiment of the invention,
Fig. 15 is an exploded view of a hub according to an eighth embodiment of the invention,
Figs. 16 and 17 are exploded views of a hub according to a ninth embodiment of the invention,
Figs. 18 and 19 are exploded views of a hub according to a tenth embodiment of the invention, and
Fig. 20 is an exploded view of a hub according to an eleventh embodiment of the invention.

### DETAILED DESCRIPTION OF THE DRAWINGS

It should be understood that the detailed description and specific examples, while indicating embodiments of the invention, are given by way of illustration only, since various changes and modifications within the spirit and scope of the invention will become apparent to those skilled in the art from this detailed description.

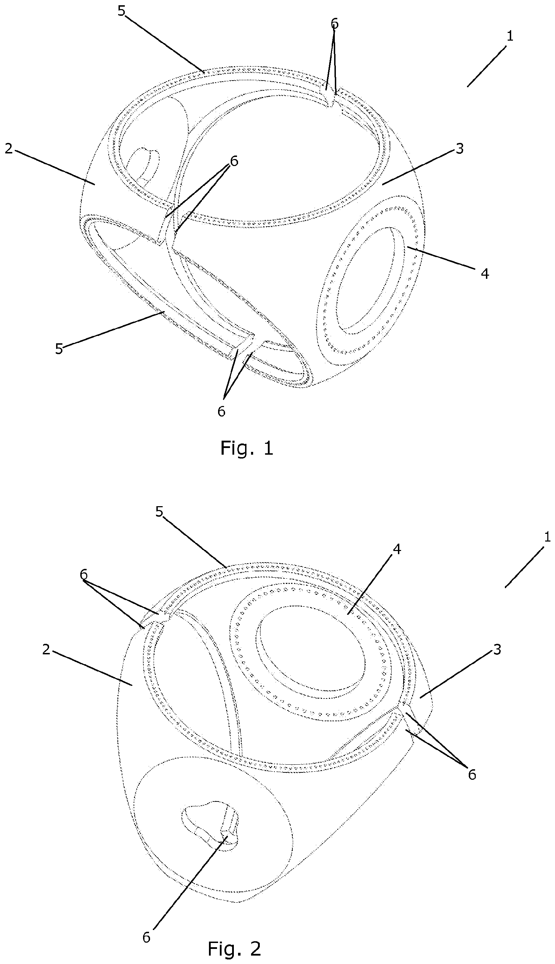

Figs. 1 and 2 are exploded views of a hub 1 according to a first embodiment of the invention, seen from two different angles. The hub 1 comprises a front hub part 2 and a rear hub part 3. The rear hub part 3 has a main shaft flange 4 formed therein. The main shaft flange 4 is adapted to be connected to a main shaft (not shown) when the hub 1 is mounted in a wind turbine.

The hub 1 further comprises three blade flanges 5, each being adapted to have a wind turbine blade connected thereto, via a pitch bearing.

The front hub part 2 and the rear hub part 3 are each provided with three connecting portions 6. The connecting portions 6 are arranged in the regions between the blade flanges 5, and they intersect the blade flanges 5, i.e. each blade flange 5 comprises a portion which forms part of the front hub part 2 and a portion which forms part of the rear hub part 3.

The hub parts 2, 3 are manufactured separately using a casting technique. Thereby, the size of each piece being casted is approximately half the size of the entire hub 1. This makes it much easier to handle the hub during the casting process, as described above. The hub parts 2, 3 are subsequently assembled by connecting the connecting portions 6 to each other in the positions shown in Figs. 1 and 2. This may, e.g., be done by bolting the connecting portions 6 to each other, or by welding them together.

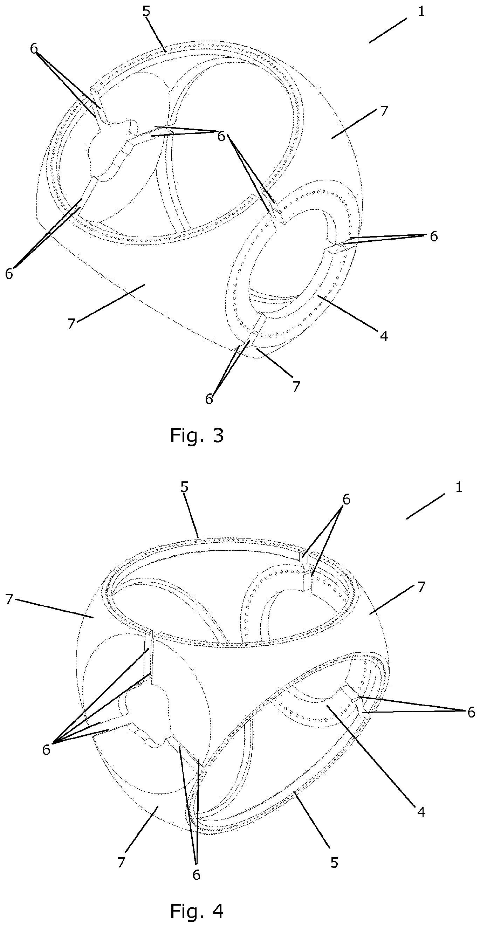

Figs. 3 and 4 are exploded views of a hub 1 according to a second embodiment of the invention, seen from two different angles. The hub 1 of Figs. 3 and 4 comprises three hub parts 7 arranged circumferentially with respect to a rotational axis of the hub 1 during operation. Similarly to the embodiment of Figs. 1 and 2, the hub 1 comprises a main shaft flange 4 and three blade flanges 5.

Each of the hub parts 7 comprises four connecting portions 6, each being adapted to be connected to a connecting portion 6 of one of the other hub parts 7. The connecting portions 6 are arranged in such a manner that each of them intersects a blade flange 5, and half of them further intersect the main shaft flange 4. Thus, each blade flange 5 comprises a portion which forms part of one hub part 7 and a portion which forms part of another hub part 7. The main shaft flange 4 comprises three portions, each forming part of one of the hub parts 7. The regions between the blade flanges 5 are all contained in a single hub part 7.

The hub parts 7 are manufactured separately using a casting technique and subsequently assembled to form the hub 1 via the connecting portions 6 as described above with reference to Figs. 1 and 2.

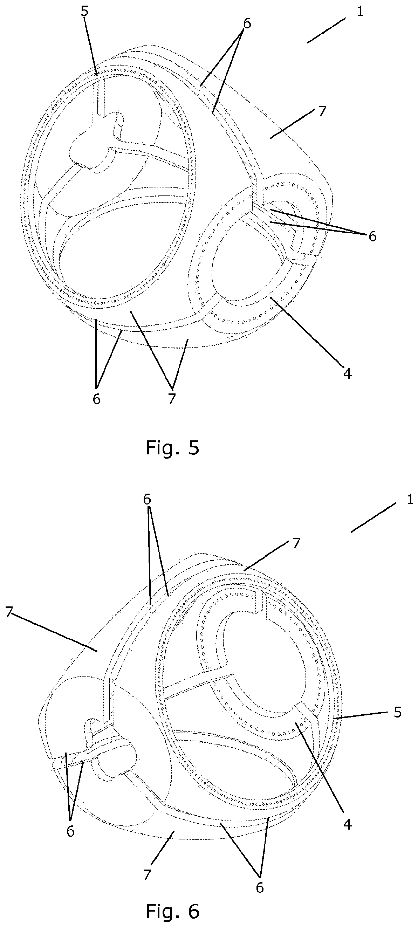

Figs. 5 and 6 are exploded views of a hub 1 according to a third embodiment of the invention, seen from two different angles. Similarly to the embodiment of Figs. 3 and 4, the hub 1 of Figs. 5 and 6 comprises three hub parts 7 arranged circumferentially with respect to a rotational axis of the hub 1 during operation. The hub 1 comprises a main shaft flange 4 and three blade flanges 5.

Each of the hub parts 7 comprises two connecting portions 6, each being adapted to be connected to a connecting portion 6 of one of the other hub parts 7. The connecting portions 6 are arranged in such a manner that each of them intersects the main shaft flange 4 and a region between two blade flanges 5. Thus, the main shaft flange 4 comprises three portions, each of which forms part of one of the hub parts 7. However, each of the blade flanges 5 is formed completely in one of the hub parts 7.

The hub parts 7 are manufactured separately using a casting technique and subsequently assembled to form the hub 1 via the connecting portions 6 as described above with reference to Figs. 1 and 2.

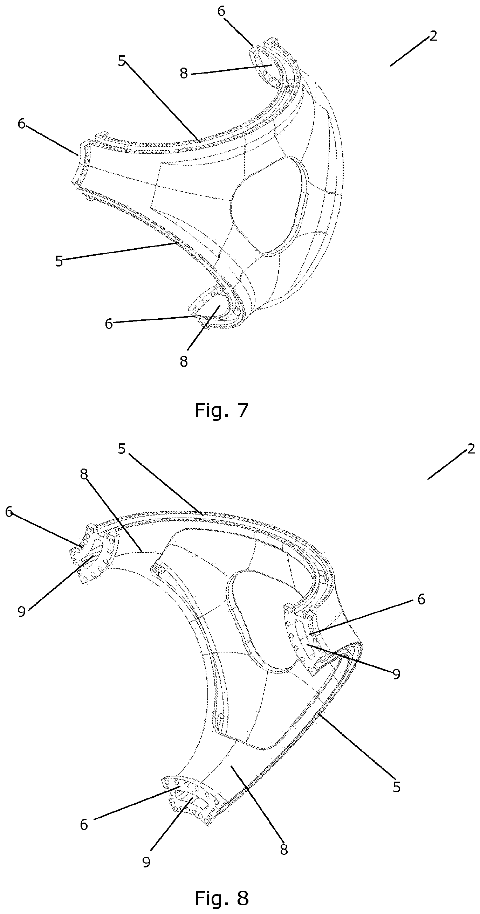

Figs. 7 and 8 are perspective views of a front hub part 2 for a hub according to a fourth embodiment of the invention, seen from two different angles. As described above with reference to Figs. 1 and 2, the front hub part 2 comprises portions of three blade flanges 5. The front hub part 2 further comprises three connecting portions 6 being adapted to be connected to corresponding connecting portions of a rear hub part.

In the regions between the blade flanges 5, the front hub part 2 is provided with inner walls 8. The inner walls 8 are arranged at a distance to the main wall of the front hub part 2, the main wall being part of the continuous shell of the hub 1, thereby forming cavities 9 between the inner walls 8 and the main wall of the front hub part 2. The inner walls 8 provide additional strength and stiffness in the regions between the blade flanges 5. The cavities 9 ensure that the additional strength and stiffness is obtained without increasing the weight of the front hub part 2 excessively.

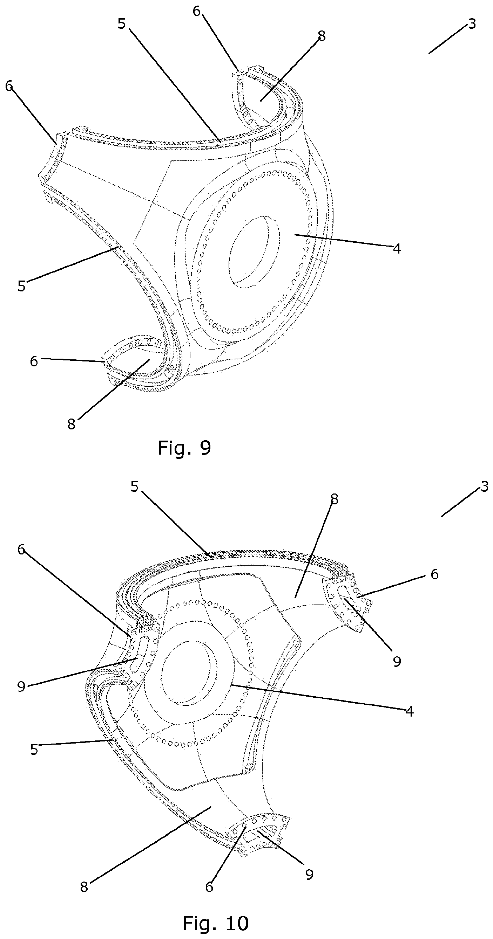

Figs. 9 and 10 are perspective views of a rear hub part 3 for a hub according to the fourth embodiment of the invention, seen from two different angles. The rear hub part 3 comprises portions of three blade flanges 5 and three connecting portions 6. The rear hub part 3 further has a main shaft flange 4 formed therein. The connecting portions 6 are adapted to be connected to the connecting portions 6 of the front hub part 2 of Figs. 7 and 8, thereby forming the hub. When the connecting portions 6 of the front hub part 2 and the connecting portions 6 of the rear hub part 3 are joined together, the blade flanges 5 are formed by the blade flange portions of the front hub part 2 and the rear hub part 3, respectively.

The rear hub part 3 is also provided with inner walls 8 in the regions between the blade flanges 5, the inner walls 8 being arranged at a distance to the main wall of the rear hub part 3, the main wall being part of the continuous shell of the hub 1, thereby forming cavities 9 between the inner walls 8 and the main wall. When the connecting portions 6 of the front hub part 2 (shown in Figs. 7 and 8) are connected to the corresponding connecting portions 6 of the rear hub part 3 (shown in Figs. 9 and 10), the inner walls 8 of the front hub part 2 and the inner walls 8 of the rear hub part 3 are arranged in continuation of each other, thereby forming one substantially continuous inner walls 8 in each of the regions between the blade flanges 5. Furthermore, the cavities 9 of the front hub part 2 and the cavities 9 of the rear hub part 3 are also arranged in continuation of each other, thereby forming one substantially continuous cavity 9 in each of the regions between the blade flanges 5.

The fact that the hub according to the fourth embodiment of the invention is divided into a front hub part 2 and a rear hub part 3, and that the connecting portions 6 intersect the regions between the blade flanges 5 makes it easy to cast the hub parts 2, 3 in such a manner that the inner walls 8 and the cavities 9 are formed, because the cavities 9 have open ends towards the connecting portions 6. This allows a casting core to be easily arranged during the casting process.

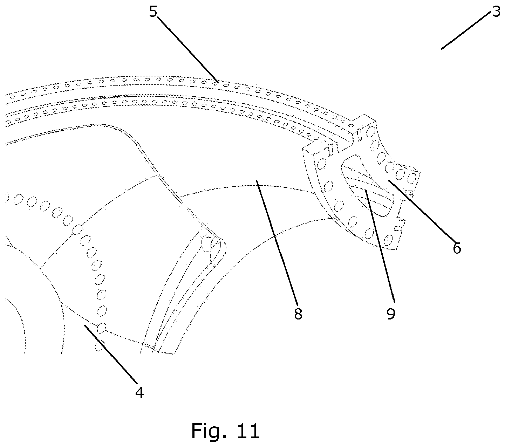

Fig. 11 is a detail of the rear hub part 3 of Figs. 9 and 10, clearly showing one of the wall parts 8 and the corresponding cavity 9.

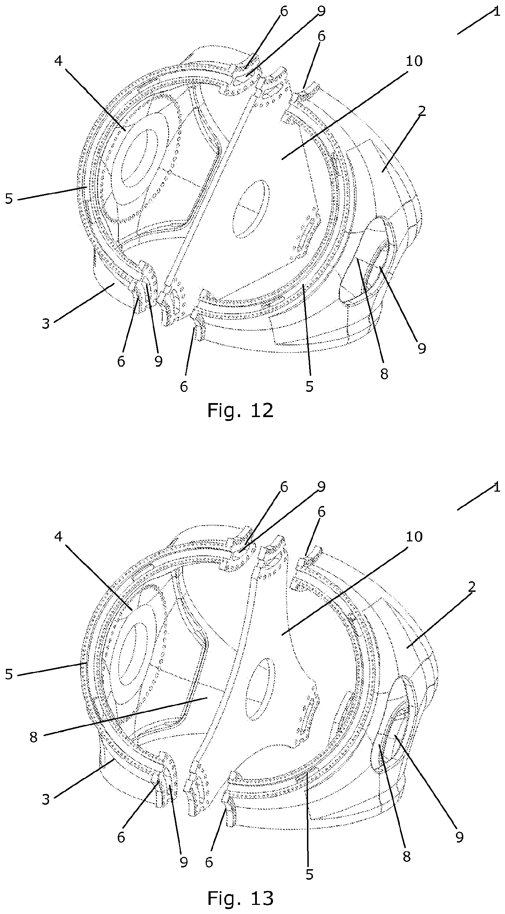

Fig. 12 is an exploded view of a hub 1 according to a fifth embodiment of the invention. The hub 1 comprises a front hub part 2 of the kind shown in Figs. 7 and 8 and a rear hub part 3 of the kind shown in Figs. 9 and 10. Between the front hub part 2 and the rear hub part 3 a stiffening element 10 in the form of a substantially triangular plate is inserted. The stiffening element 10 interconnects the three connecting portions 6 of the front hub part 2 and the three connecting portions 6 of the rear hub part 3, thereby providing additional rigidity to the hub 1.

Fig. 13 is an exploded view of a hub 1 according to a sixth embodiment of the invention. The hub 1 of Fig. 13 is very similar to the hub 1 of Fig. 12. However, in Fig. 13 the stiffening element 10 has a Y-like shape. Thereby the amount of material used for the stiffening element 10 is reduced as compared to the stiffening element 10 shown in Fig. 12. Accordingly, the weight of the stiffening element 10 is reduced, but the rigidity provided by the stiffening element 10 is substantially as high as the rigidity provided by the stiffening element of Fig. 12.

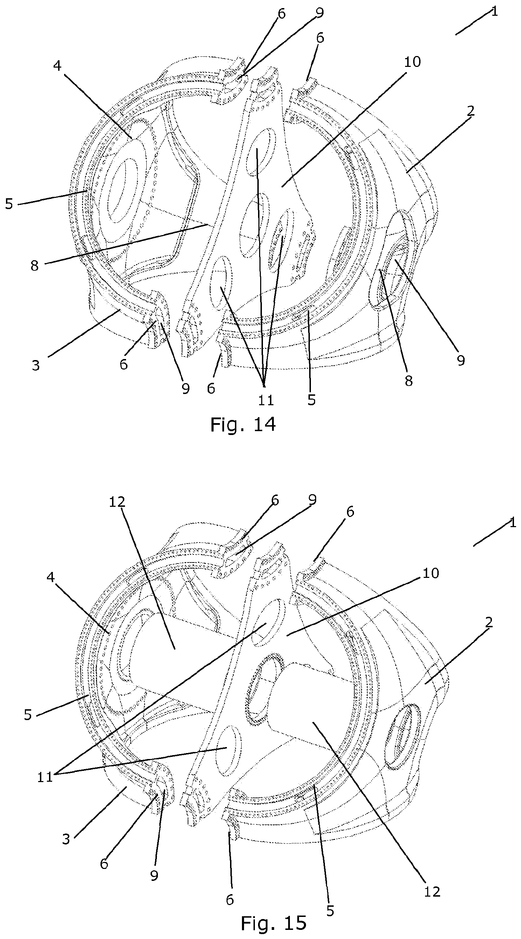

Fig. 14 is an exploded view of a hub 1 according to a seventh embodiment of the invention. The hub 1 of Fig. 14 is very similar to the hub 1 of Fig. 13. However, in Fig. 14 three additional openings 11 have been provided in the stiffening element 10, thereby even further reducing the amount of material used for the stiffening element 10, and thereby reducing the weight of the stiffening element 10 even further.

Fig. 15 is an exploded view of a hub 1 according to an eighth embodiment of the invention. The hub 1 of Fig. 15 is very similar to the hub 1 of Fig. 14. However, the hub 1 of Fig. 15 is further provided with two tube sections 12 interconnecting the stiffening element 10 with the front hub part 2 and the rear hub part 3, respectively. The tube sections 12 provide further rigidity to the hub 1.

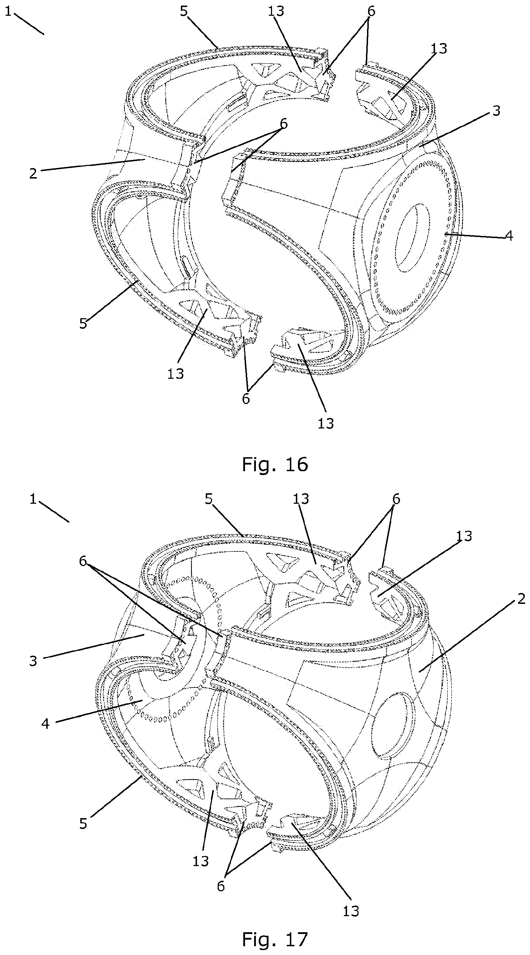

Figs. 16 and 17 are exploded views of a hub 1 according to a ninth embodiment of the invention, seen from two different angles. Similarly to some of the embodiments described above, the hub 1 comprises a front hub part 2 and a rear hub part 3. The rear hub part 3 has a main shaft flange 4 formed therein. The hub 1 further comprises three blade flanges 5, each being adapted to have a wind turbine blade connected thereto, via a pitch bearing. The front hub part 2 and the rear hub part 3 are each provided with three connecting portions 6, adapted to be pair-wise connected to each other. Each of the connecting portions 6 intersects a blade flange 5, so that the blade flange 5 comprises a section forming part of the front hub part 2 and a section forming part the rear hub part 3.

In the regions between the blade flanges 5, the hub 1 is provided with reinforcement elements in the form of ribs 13. The ribs 13 provide additional strength and stiffness to the regions between the blade flanges 5, thereby allowing these regions to be small or narrow, thereby allowing the size of the hub 1 to be minimised. Since the reinforcement elements are in the form of ribs 13, rather than being in the form of an increase in the thickness of the walls of the continuous shell in the regions between the blade flanges 5, the additional strength and stiffness are obtained without a significant increase in the weight of the hub 1. Thus, the ribs 13 function in a manner which is similar to the inner walls 8 shown in Figs. 7-15.

The ribs 13 could be formed by casting the ribs 13 directly along with the hub parts 2, 3, i.e. by adding material to the main wall of the continuous shell in the positions of the ribs 13. Alternatively, the main wall may be casted with a thickness corresponding to the thickness of the ribs 13, and material may subsequently be removed in order to form the ribs 13.

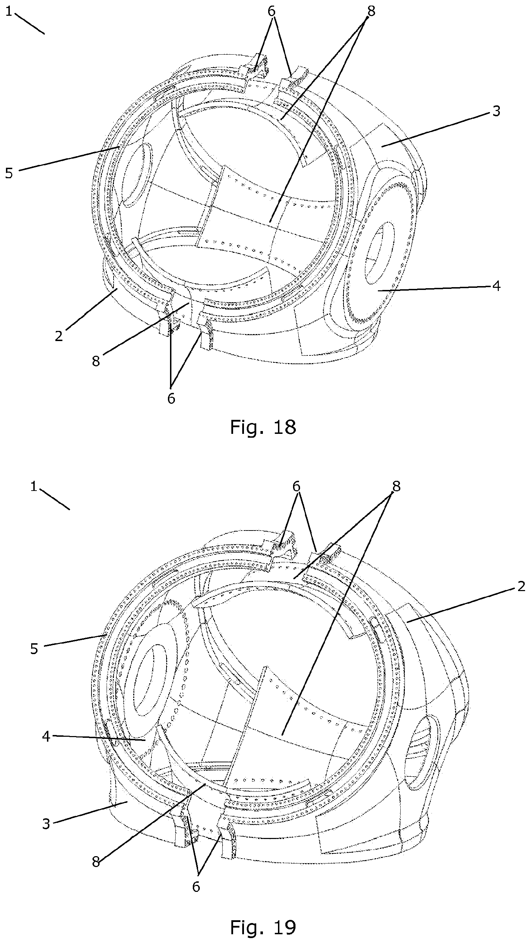

Figs. 18 and 19 are exploded views of a hub 1 according to a tenth embodiment of the invention, seen from two different angles. The hub 1 of Figs. 18 and 19 is very similar to the hub 1 illustrated in Figs. 7-11. However, in the embodiment shown in Figs. 18 and 19, the inner walls 8 are in the form of separate parts, which are attached to the hub 1 in the regions between the blade flanges 5, after the front hub part 2 and the rear hub part 3 have been assembled via the connecting portions 6. The inner walls 8 may be attached to the hub 1 by means of bolt connections or other suitable reversible connecting means. As an alternative, the inner walls 8 may be attached to the hub 1 in a permanent manner, e.g. using a welding technique.

When the inner walls 8 are attached to the hub 1, cavities are formed between the inner walls 8 and the continuous shell of the hub 1 in the regions between the blade flanges 5. Thereby the strength and stiffness of the regions between the blade flanges 5 are increased without significantly increasing the weight of the hub 1, i.e. the advantages described above with reference to Figs. 7-11 are obtained.

One advantage of providing the inner walls 8 in the form of separately manufactured parts, rather than casting them directly with the hub parts 2, 3, is that in some cases it is easier to separately manufacture and subsequently attach the inner walls 8 to the hub 1 than it is to form the casting mould in a manner which allows the inner walls 8 to be casted directly with the hub parts 2, 3.

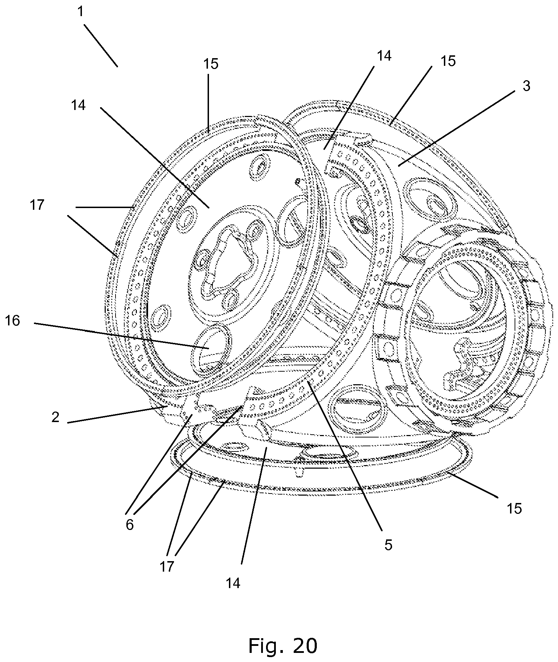

Fig. 20 is an exploded view of a hub 1 according to an eleventh embodiment of the invention. As described above with reference to Figs. 1 and 2, the front hub part 2 comprises portions of three blade flanges 5. The front hub part 2 further comprises three connecting portions 6 being adapted to be connected to corresponding connecting portions 6 of the rear hub part 3.

The hub 1 further comprises blade flange reinforcement elements arranged at the blade flanges 5. In the present embodiment, the blade flange reinforcement element comprises three circular plate elements 14 and three ring shaped elements 15, one of each for each of the blade flanges 5.

The plate elements 14 are of a size corresponding to the size of the blade flanges 5, thereby providing a more rigid construction of the hub 1. The circular plate elements 14 have openings 16 allowing a person to access the hollow body of the shell.

The ring shaped elements 15 are of a size corresponding to the size of the blade flanges 5 and are positioned on top of the blade flanges 5 to provide a more rigid blade flange 5 with a higher strength.

Each of the ring shaped elements 15 comprises four ring parts 17. Two of the abutting joints of the ring shaped elements are positioned displaced relative to the connecting portions 6 whereas the other two abutting joint are positioned on top of the connection between the front hub part 2 and the rear hub part 3.

## Claims

1. A hub (1) for a wind turbine, the hub comprising a continuous shell forming a hollow body with a main shaft flange (4) adapted to connect the hub to a main shaft and one or more blade flanges, (5) each blade flange being adapted to connect the hub to a wind turbine blade, the hollow body being assembled from at least two hub parts (2, 3) connected to each other via one or more connection portions, each hub part being casted from a castable material, wherein the main shaft flange comprises a section forming part of or being attached to one of the hub parts and a section forming part of or being attached to another hub part, **characterized by** the fact that the number of hub parts is equal to the number of blade flanges.

2. A hub according to claim 1, wherein at least one blade flange comprises a section forming part of or being attached to one of the hub parts and a section forming part of or being attached to another hub part.

3. A hub according to claim 1 or 2, wherein the connecting portion(s) extends between two blade flanges.

4. A hub according to any of the preceding claims, wherein the hub parts are connected to each other by means of reversible connecting means.

5. A hub according to any of the preceding claims, further comprising one or more reinforcement elements arranged at or near the flange(s).

6. A hub according to claim 5, wherein the reinforcement element(s) comprise(s) an inner wall arranged within the hollow body at a distance to the continuous shell, thereby forming a cavity between the inner wall and the continuous shell.

7. A hub according to any of the preceding claims, further comprising at least one stiffening element interconnecting at least two connecting portions of a first hub part and at least two connecting portions of a second hub part.

8. A hub according to any of the preceding claims, further comprising at least one tube section interconnecting at least two of the hub parts.

9. A hub according to any of the preceding claims, further comprising at least one blade flange reinforcement elements arranged at the blade flange(s).

10. A hub according to claim 9, wherein the blade flange reinforcement element comprises a circular plate element.

11. A hub according to claim 9 or 10, wherein the blade flange reinforcement element comprises a ring shaped element.

12. A method of fabricating a hub for a wind turbine, the hub comprising a continuous shell forming a hollow body with a main shaft flange adapted to connect the hub to a main shaft, and one or more blade flanges, each blade flange being adapted to connect the hub to a wind turbine blade, the method comprising the steps of:
- casting at least two hub parts, the number of hub parts being equal to the number of blade flanges,
- machining one or more connecting portions in each of the hub parts, and
- assembling the hub parts via said connecting portions so that the main shaft flange comprises a section forming part of or being attached to one of the hub parts and a section forming part of or being attached to another hub part.

13. A method according to claim 12, further comprising a step of arranging a casting core in a region near at least one blade flange, prior to or during the step of casting at least two hub parts, in order to form a cavity between an inner wall and the continuous shell in said region.

14. A method according to any of claims 12-13, wherein the step of assembling the hub parts comprises connecting at least one stiffening element to at least two connecting portions of a first hub part and to at least two connecting portions of a second hub part.

15. A wind turbine comprising a hub according to any of claims 1-11.

## Patentansprüche

1. Nabe (1) für eine Windturbine, wobei die Nabe eine kontinuierliche Schale, die einen hohlen Körper bildet, der einen Hauptantriebswellenflansch (4) aufweist, der angepasst ist, um die Nabe mit einer Hauptantriebswelle zu verbinden, und einen oder mehrere Blattflansche (5) umfasst, wobei jeder Blattflansch angepasst ist, um die Nabe mit einem Windturbinenblatt zu verbinden, wobei der hohle Körper aus zumindest zwei Nabenteilen (2, 3), die über einen oder mehrere Verbindungsabschnitte miteinander verbunden sind, zusammengesetzt ist, wobei jedes Nabenteil aus einem gießbaren Material gegossen ist, wobei der Hauptantriebswellenflansch einen Abschnitt, der einen Teil von einem von den Nabenteilen bildet oder an diesem befestigt ist, und einen Abschnitt, der einen Teil von dem anderen Nabenteil bildet oder an diesem befestigt ist, umfasst, **gekennzeichnet durch** die Tatsache, dass die Anzahl der Nabenteile gleich der Anzahl von Blattflanschen ist.

2. Nabe nach Anspruch 1, wobei zumindest ein Blattflansch einen Abschnitt, der einen Teil von einem von den Nabenteilen bildet oder an diesem befestigt ist, und einen Abschnitt, der einen Teil von dem anderen Nabenteil bildet oder an diesem befestigt ist, umfasst.

3. Nabe nach Anspruch 1 oder 2, wobei sich der (die) Verbindungsabschnitt(e) zwischen zwei Blattflanschen erstreckt (erstrecken).

4. Nabe nach einem der vorstehenden Ansprüche, wobei die Nabenteile mit Hilfe von reversiblen Verbindungsmitteln miteinander verbunden sind.

5. Nabe nach einem der vorstehenden Ansprüche, weiter umfassend ein oder mehrere Verstärkungselemente, die an oder nahe dem Flansch (den Flanschen) angeordnet sind.

6. Nabe nach Anspruch 5, wobei das Verstärkungselement (die Verstärkungselemente) eine Innenwand umfasst (umfassen), die in dem hohlen Körper in einem Abstand zu der kontinuierlichen Schale angeordnet ist, wodurch ein Hohlraum zwischen der Innenwand und der kontinuierlichen Schale gebildet wird.

7. Nabe nach einem der vorstehenden Ansprüche, weiter umfassend zumindest ein Versteifungselement, das zumindest zwei Verbindungsabschnitte eines ersten Nabenteils und zumindest zwei Verbindungsabschnitte eines zweiten Nabenteils miteinander verbindet.

8. Nabe nach einem der vorstehenden Ansprüche, weiter umfassend zumindest einen Rohrabschnitt, der zumindest zwei der Nabenteile miteinander verbindet.

9. Nabe nach einem der vorstehenden Ansprüche, weiter umfassend zumindest ein Blattflanschverstärkungselement, das an dem Blattflansch (den Blattflanschen) angeordnet ist.

10. Nabe nach Anspruch 9, wobei das Blattflanschverstärkungselement ein kreisförmiges Plattenelement umfasst.

11. Nabe nach Anspruch 9 oder 10, wobei das Blattflanschverstärkungselement ein ringförmiges Element umfasst.

12. Verfahren zum Fertigen einer Nabe für eine Windturbine, wobei die Nabe eine kontinuierliche Schale, die einen hohlen Körper bildet, der einen Hauptantriebswellenflansch aufweist, der angepasst ist, um die Nabe mit einer Hauptantriebswelle zu verbinden, und einen oder mehrere Blattflansche umfasst, wobei jeder Blattflansch angepasst ist, um die Nabe mit einem Windturbinenblatt zu verbinden, wobei das Verfahren die Schritte umfasst von:
- Gießen von zumindest zwei Nabenteilen, wobei die die Anzahl der Nabenteile gleich der Anzahl von Blattflanschen ist,
- Bearbeiten eines oder mehrerer Verbindungabschnitte in jedem der Nabenteile, und
- Zusammensetzen der Nabenteile über die Verbindungsabschnitte, sodass der Hauptantriebswellenflansch einen Abschnitt, der einen Teil von einem von den Nabenteilen bildet oder an diesem befestigt ist, und einen Abschnitt, der einen Teil von dem anderen Nabenteil bildet oder an diesem befestigt ist, umfasst.

13. Verfahren nach Anspruch 12, weiter umfassend einen Schritt des Anordnens eines Gusskerns in einem Bereich nahe zumindest einem Blattflansch vor oder Während des Gießens von zumindest zwei Nabenteilen, um einen Hohlraum zwischen einer Innenwand und der kontinuierlichen Schale in dem Bereich zu bilden.

14. Verfahren nach einem der Ansprüche 12-13, wobei der Schritt des Zusammensetzens der Nabenteile ein Verbinden von zumindest einem Versteifungselement mit zumindest zwei Verbindungsabschnitten eines ersten Nabenteils und mit zumindest zwei Verbindungsabschnitten eines zweiten Nabenteils umfasst.

15. Windturbine, umfassend eine Nabe nach einem der Ansprüche 1-11.

## Revendications

1. Moyeu (1) pour une éolienne, le moyeu comprenant une coque continue formant un corps creux avec une bride d'arbre principal (4) adaptée pour raccorder le moyeu à un arbre principal et une ou plusieurs brides de pale (5), chaque bride de pale étant adaptée pour raccorder le moyeu à une pale d'éolienne, le corps creux étant assemblé à partir d'au moins deux parties de moyeu (2, 3) raccordées l'une à l'autre via une ou plusieurs portions de raccordement, chaque partie de moyeu étant coulée à partir d'un matériau coulable, dans lequel la bride d'arbre principal comprend une section faisant partie de ou fixée à une des parties de moyeu et une section faisant partie de ou fixée à une autre partie de moyeu, **caractérisé en ce que** le nombre de parties de moyeu est égal au nombre de brides de pale.

2. Moyeu selon la revendication 1, dans lequel au moins une bride de pale comprend une section faisant partie de ou fixée à une des parties de moyeu et une section faisant partie de ou fixée à une autre partie de moyeu.

3. Moyeu selon la revendication 1 ou 2, dans lequel la/les portion(s) de raccordement s'étend entre deux brides de pale.

4. Moyeu selon l'une quelconque des revendications précédentes, dans lequel les parties de moyeu sont raccordées l'une à l'autre au moyen de moyens de raccordement réversibles.

5. Moyeu selon l'une quelconque des revendications précédentes, comprenant en outre un ou plusieurs éléments de renfort agencés au niveau de ou près de la/des bride(s).

6. Moyeu selon la revendication 5, dans lequel le(s) élément(s) de renfort comprend/comprennent une paroi intérieure agencée à l'intérieur du corps creux à une distance de la coque continue, formant ce faisant une cavité entre la paroi intérieure et la coque continue.

7. Moyeu selon l'une quelconque des revendications précédentes, comprenant en outre au moins un élément de raidissement reliant au moins deux portions de raccordement d'une première partie de moyeu et au moins deux portions de raccordement d'une deuxième partie de moyeu.

8. Moyeu selon l'une quelconque des revendications précédentes, comprenant en outre au moins une section de tube reliant au moins deux des parties de moyeu.

9. Moyeu selon l'une quelconque des revendications précédentes, comprenant en outre au moins un élément de renfort de bride de pale agencé au niveau de la/des bride(s) de pale.

10. Moyeu selon la revendication 9, dans lequel l'élément de renfort de bride de pale comprend un élément de plaque circulaire.

11. Moyeu selon la revendication 9 ou 10, dans lequel l'élément de renfort de bride de pale comprend un élément de forme annulaire.

12. Procédé de fabrication d'un moyeu pour une éolienne, le moyeu comprenant une coque continue formant un corps creux avec une bride d'arbre principal adaptée pour raccorder le moyeu à un arbre principal, et une ou plusieurs brides de pale, chaque bride de pale étant adaptée pour raccorder le moyeu à une pale d'éolienne, le procédé comprenant les étapes de :
- coulage d'au moins deux parties de moyeu, le nombre de parties de moyeu étant égal au nombre de brides de pale,
- usinage d'une ou plusieurs portions de raccordement dans chacune des parties de moyeu, et
- assemblage des parties de moyeu via lesdites portions de raccordement de sorte que la bride d'arbre principal comprenne une section faisant partie de ou fixée à une des parties de moyeu et une section faisant partie de ou fixée à une autre partie de moyeu.

13. Procédé selon la revendication 12, comprenant en outre une étape d'agencement d'un noyau de coulée dans une région près d'au moins une bride de pale, avant ou pendant l'étape de coulage d'au moins deux parties de moyeu, afin de former une cavité entre une paroi intérieure et la coque continue dans ladite région.

14. Procédé selon l'une quelconque des revendications 12-13, dans lequel l'étape d'assemblage des parties de moyeu comprend le raccordement d'au moins un élément de raidissement à au moins deux portions de raccordement d'une première partie de moyeu et à au moins deux portions de raccordement d'une deuxième partie de moyeu.

15. Éolienne comprenant un moyeu selon l'une quelconque des revendications 1 à 11.
